# EUROPEAN PATENT APPLICATION

(11) **EP 2 910 124 A1**
(43) Date of publication of application: **26.08.2015**
(21) Application number: 12886537.5
(22) Date of filing: 19.10.2012
(51) Int. Cl.: A01N 33/02, A01N 25/02, A01N 25/04, A01N 59/00, A01P 3/00

(54) **STIMULANT AND METHOD FOR STIMULATING PLANT GROWTH AND DEVELOPMENT**

(71) Applicant: Obshchestvo S Ogranichennoy Otvetstvennostyu "Nanobiotekh", Moscow 123103 (RU); Denisov, Albert Nikolaevich, Barnaul 656002 (RU)
(72) Inventor: DENISOV, Albert Nikolaevich, Altaiskiy kray Barnaul 656002 (RU); KRUTYAKOV, Yuriy Andreevich, Moscow 125057 (RU); KUDRINSKIY, Aleksey Aleksandrovich, Moscow 119361 (RU)
(74) Representative: AMMANN PATENTANWÄLTE AG BERN
(86) International application number: PCT/RU2012/000846
(87) International publication number: WO 2014/062079

(57) **Abstract**

The invention relates to agriculture, and more particularly to plant cultivation, and concerns a stimulant for the germination, growth and development of spring sown and winter sown cereals and leguminous plants, field vegetable crops and protected vegetable crops, tree and shrub crops, fruit crops, berry crops, aromatic crops, horticultural crops, ornamental crops, cucurbitaceous crops, tilled crops, industrial crops and feed crops. The invention can be used for pre-plant seed treatment and also for the treatment of seedlings in the cultivation of plants in hotbed and green house facilities, on personal plots, in urban forestry and farms, and also when planting areas in agricultural complexes, forest nurseries, forest areas and botanical gardens. The stimulant for plant growth and development includes nano-sized silver particles and also includes polyhexamethylene biguanide or polyhexamethylene guanidine, or at least one polyhexamethylene biguanide salt or polyhexamethylene guanidine salt. The method for stimulating plant growth and development involves treating seeds of plants or vegetative plants with a solution which includes nano-sized silver particles and which also includes polyhexamethylene biguanide or polyhexamethylene guanidine, or at least one polyhexamethylene biguanide salt or polyhexamethylene guanidine salt. The method for stimulating plant growth and development involves treating seeds of plants or vegetative plants with a solution which includes nano-sized silver particles, and treating seeds of plants or vegetative plants with a solution which includes polyhexamethylene biguanide or polyhexamethylene guanidine, or at least one polyhexamethylene biguanide salt or polyhexamethylene guanidine salt.

## Description

### Technical field

The invention belongs to an agricultural sector, in particular, to a crop growing and stimulation of germination, growth and development of spring and winter corn, grain legumes, open-ground and indoor vegetables, hardy-shrub, fruit, berry, essential-oil, garden, decorative, vine, tilled, industrial and forage crops. The invention can be used to the seeds preplanting cultivation and sprouts cultivation, when growing plants into the hotbed and hothouse, small-scale farming, urban forestry and farms, agricultural complexes, forest gardens, forest districts, botanical gardens, and landscaping.

### State of art

An intensive use of pesticides and its mixtures in agricultural sector leads to a certain slowdown in the growth and development of the domestic plants, and can result not only in the growth of domestic plants, especially under conditions of water deficiency and climate warming, but also in quality of agricultural products.

For that matter, there is a need to use growth and development stimulators, which decrease negative influence of the seeds preplanting cultivation with pesticides on the domestic plants and increase the germinating ability of the domestic plants, the growth rate of domestic plants and yield.

The growth stimulators and antimicrobial agents, based on polyhexamethyleneguanidine hydrochloride are known from the technical level

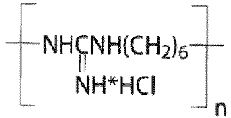

The growth and development stimulator of vegetable crops and the method of vegetable crops growing and developing stimulation have been discovered in the patent of Russian Federation No. 2 329 647, priority 27.07.2008. Vegetable seeds are soaked within 10-15 min in 15-50 1 per 1 t of seeds of water solution of polyhexamethyleneguanidine hydrochloride 0.00001-0.03% concentration, with a molecular weight from 5 to 9 kD, or spraying with this solution. In this case an increment of the vegetable seeds germinating power and viability, growth and development acceleration, yield increase are achieved.

The germination, growth and development stimulator of woody plants and the method of woody plants germination, growth and development stimulation have been discovered in the patent of Russian Federation No. 2 362 303, priority 27.07.2009. The woody plant seeds, preferably oak and pine seeds, are soaked within 18-24 hours in a water solution of polyhexamethyleneguanidine hydrochloride 0.0001-0.5% concentration, then the seeds are dried. Use of the invention allows increasing the germination ability and germination of the woody plant seeds, accelerating its growth and development and simplifying the process of seed treatment.

The growth, development and florification stimulator of flowering plant and the method of flowering plant growing, developing and florificating stimulation have been discovered in the patent of Russian Federation No. 2 432 829. The seeds are sprayed with 10-15 1 per 1 t of seeds of water solution of polyhexamethyleneguanidine hydrochloride 0.00001-0.02% concentration, with a molecular weight from 5 to 9 kD. The vegetative plants, which are in the 5-7 leaf stage or in the start of flower-bud formation stage, are sprayed once or twice with 100-150 1 per 1 hectare of acreage of the solution. In this case growth, development and florification indexes improved, the number of branches and flowers at the flower crops increases, landscaping of parks, gardens, small-scale farming effectiveness increases.

The growth and development stimulator of grain crops and the method of corn and wheat growing and developing stimulation have been discovered in the patent of Russian Federation No. 2 328 854, priority 20.07.2008. The seeds of grain crops are sprayed with 35-40 1 per 1 t of seeds of water solution of polyhexamethyleneguanidine hydrochloride 0.01-0.05% concentration, with a molecular weight from 5 to 9 kD. The further cultivation of grain crops can be carried out on pesticide ground. Use of the invention allows to increase the germination ability of the corn and wheat seeds, accelerate its growth and development, decrease the phytopathogens perishability and increase the grain crops yield. A wheat seeds treatment with 17.5-20.0 g per 1 t of seeds of water solution of polyhexamethyleneguanidine hydrochloride 0.05% concentration allows to increase the germination ability by 0-10.6%. A wheat seeds treatment with 7.0-8.0 g per 1 t of seeds of water solution of polyhexamethyleneguanidine hydrochloride 0.02% concentration allows to increase shoot length by 10-30% and root length by 10-12%.

The invention, discovered in the patent of Russian Federation No. 2 328 854, priority 20.07.2008, is the closest analogue of the claimed invention on the basis of the essential features.

The disadvantages of the known plant growth and development stimulators, based on polyhexamethyleneguanidine hydrochloride, and appropriate methods of stimulation include high cost, due to a sufficiently large flow of active substance - polyhexamethyleneguanidine hydrochloride and a small stimulation of seeds germination.

This raises the problem of increasing the effectiveness of plant growth and development stimulators, based on polyhexamethyleneguanidine hydrochloride, and appropriate methods of stimulation not only by increasing the stimulating effect of specimens, but also by decreasing the price.

Said technical result is achieved with the use of the stimulators and the methods of plant growth and development stimulation, described in more detail hereinafter.

### Specification of invention

During an experimental study of the effect of additives on the efficacy of the plant growth and development stimulators, based on polyhexamethylenebiguanide 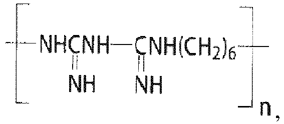 polyhexamethyleneguanidine 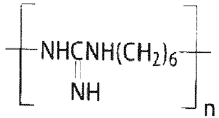 and its salts and appropriate methods of stimulation it was found, that the introduction of small amounts of silver nanoscale particles or a mixture of the silver nanoparticles and the silver salts in the stimulator composition increases seeds germinating power and viability, accelerates the growth and development of many cultivated plants and increases its yield.

The use of the silver nanoparticles and the silver salts in conjunction with polyhexamethylenebiguanide, polyhexamethyleneguanidine or its salts allows, depending on processing conditions and composition of the specimen: a) to achieve the same or a greater level of stimulation of plant growth and development, like in the application of polyhexamethyleneguanidine hydrochloride, at the lower concentration of active ingredient and, consequently, at lower cost, or b) to increase the effectiveness of the plant growth and development stimulation in comparison with the efficiency of polyhexamethyleneguanidine hydrochloride at a fixed stimulator cost. The use of the silver nanoparticles and the silver salts in conjunction with polyhexamethylenebiguanide, polyhexamethyleneguanidine or its salts allows to expand the range of the plant growth and development stimulators.

The claimed invention relates to the plant growth and development stimulator, in particular, of spring and winter corn, grain legumes, open-ground and indoor vegetables, hardy-shrub, fruit, berry, essential-oil, garden, decorative, vine, tilled, industrial and forage crops.

The claimed invention relates to the plant growth and development stimulator, containing the silver nanoparticles and polyhexamethylenebiguanide or polyhexamethyleneguanidine or, at least, one polyhexamethylenebiguanide or polyhexamethyleneguanidine salt.

The polyhexamethylenebiguanide or polyhexamethyleneguanidine or, at least, one polyhexamethylenebiguanide or polyhexamethyleneguanidine salt concentration in the plant growth and development stimulator varies from 0.00001 to 1 wt% in a preferred embodiment.

The silver nanoparticles concentration in the plant growth and development stimulator varies from 0.00001 to 1 wt% in a preferred embodiment.

The plant growth and development stimulator includes one silver salt, at least, in a preferred embodiment.

The silver salt is selected from a group, including silver nitrate, acetate, citrate, chloride, bromide, iodide and sulphate in a preferred embodiment.

At least the one silver salt concentration in the plant growth and development stimulator varies from 0.00001 to 1 wt% in a preferred embodiment.

The polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate in a preferred embodiment.

The claimed invention relates to the method of the plant growth and development stimulation, in particular, of a spring and winter corn, grain legumes, open-ground and indoor vegetables, hardy-shrub, fruit, berry, essential-oil, garden, decorative, vine, tilled, industrial and forage crops.

The claimed invention relates to the method of the plant growth and development stimulation, wherein the plant seeds or vegetative plants are treated with a solution, comprising the silver nanoparticles and polyhexamethylenebiguanide or polyhexamethyleneguanidine or, at least, one polyhexamethylenebiguanide or polyhexamethyleneguanidine salt, and the method of the plant growth and development stimulation, wherein the plant seeds or vegetative plants are treated with a solution, comprising the silver nanoparticles and treated with a solution, comprising polyhexamethylenebiguanide or polyhexamethyleneguanidine or, at least, one polyhexamethylenebiguanide or polyhexamethyleneguanidine salt.

The polyhexamethylenebiguanide or polyhexamethyleneguanidine or, at least, one polyhexamethylenebiguanide or polyhexamethyleneguanidine salt concentration in the plant growth and development stimulator varies from 0.00001 to 1 wt% in a preferred embodiment.

The silver nanoparticles concentration in the plant growth and development stimulator varies from 0.00001 to 1 wt% in a preferred embodiment.

Solution, containing silver nanoparticles, additionally includes, at least, one silver salt in a preferred embodiment.

The silver salt is selected from a group, including silver nitrate, acetate, citrate, chloride, bromide, iodide and sulphate in a preferred embodiment.

At least the one silver salt concentration in the plant growth and development stimulator varies from 0.00001 to 1 wt% in a preferred embodiment.

The polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate in a preferred embodiment.

The invention is illustrated by examples of its implementation alternatives.

### Example 1

Solution, containing 0.001 wt% polyhexamethylenebiguanide hydrochloride and 0.01% silver nanoparticles, was used as a plant growth and development stimulator. The solution was prepared by the procedure, described in the patent of Russian Federation No. 2 419 439, priority 27.05.2011 "Antimicrobial agent and its preparation method". The spring soft wheat variety Altayskaya 105 was sprayed with 100 ml/t (0.011 g of mixture per 1 t of seeds) of this agent. Evaluation of the stimulating effect of the agent was conducted by rolls method in accordance with the National State Standard 12044-93 "An agricultural seeds. Method for determination of disease infestation", which applies to anis, pea, coriander, corn, bast fiber, onion, carrot, oat, sunflower, panic, wheat, rice, rye, beet, omum plant, soybean, bean, fennel, clary and barley seeds.

It was found, that the use of the agent significantly increases the seeds germination ability of at least 4,4%, shoot length by 11,1%, root length by 37,2%, root mass by 33,6%, in comparison with the control experiments, in which distilled water was used instead of a plant growth and development stimulator. It is known from the prior art, that the same order of magnitude growth and development stimulation of wheat is achieved using 7.0-20.0 g per 1 t seeds of polyhexamethyleneguanidine hydrochloride as a plant growth and development stimulator (the patent of Russian Federation No. 2 328 854, priority 20.07.2008). Therefore, a plant growth and development stimulator, based on polyhexamethylenebiguanide hydrochloride and silver nanoparticles, has significantly greater stimulating activity than the known a plant growth and development stimulator, based on polyhexamethyleneguanidine hydrochloride.

Therefore, the claimed technical result - increasing of seeds germination ability, shoot and root length and root mass, i.e. wheat growth and development - was achieved by using the proposed plant growth and development stimulator.

### Group of examples 1

In the group of examples 1 the plant growth and development stimulator was prepared, similarly example 1, though the silver nanoparticles was used as the first active reagent, polyhexamethylenebiguanide hydrochloride or polyhexamethylenebiguanide phosphate, or polyhexamethylenebiguanide gluconate, or polyhexamethyleneguanidine hydrochloride, or polyhexamethyleneguanidine phosphate, or polyhexamethyleneguanidine gluconate, or polyhexamethylenebiguanide, or polyhexamethyleneguanidine was used as the second active reagent. The concentration of polyhexamethylenebiguanide or polyhexamethyleneguanidine, or at least, polyhexamethylenebiguanide or polyhexamethyleneguanidine salt ranged from 0.00001 to 1 wt%, the concentration of silver nanoparticles ranged from 0.00001 to 1 wt%, in some examples the silver salt was introduced additionally into a solution, silver nitrate, or acetate, or citrate, or chloride, or bromide, or iodide or sulphate was used as a silver salt, the concentration of silver salt ranged from 0.00001 to 1 wt%, seeds or vegetative plants was treated with preparation. The low-solubility silver salts, for example silver chloride, bromide, iodide or sulphate was added into solution in the form of powder or powder dispersion in water to form, ultimately, the corresponding colloid solution.

Assessment of the effectiveness of the plant growth and development stimulation was carried out analogously to Example 1 in respect to spring and winter corn, grain legumes, open-ground and indoor vegetables, vine, forage and tilled cultures, such as a pea, corn, onion, carrot, tomato, cuke, oat, panic, wheat, buckwheat, rice, rye, beat, soy, bean, barley, baga, rape, watermelon, melon and gourd. In all cases technical result consists in statistically significant plant growth and development stimulation was achieved. Thus, it was found, that the use of preparation, containing of 0.001 wt% polyhexamethylenebiguanide hydrochloride and 0.01 wt% silver nanoparticles, statistically significant increases pea seeds germination ability by 8.6%, rape seeds - by 5.6%, pea shoot length - by 9.1 %, buckwheat shoot length - by 5.6%, rape shoot length - by 6.4%, pea root length - by 20.3%, rape shoot length - by 20.8%, pea shoot mass - by 11.7%, rape shoot mass - by 5.0%, pea root mass - 35.0%, rape root mass - 22.5%, compared with the control experiments in which, distilled water was used instead the plant growth and development stimulator.

### Group of examples 2

In the group of examples 2 the plant growth and development stimulator was prepared, similarly example 1, though the silver nanoparticles was used as the first active reagent, polyhexamethylenebiguanide hydrochloride or polyhexamethylenebiguanide phosphate, or polyhexamethylenebiguanide gluconate, or polyhexamethyleneguanidine hydrochloride, or polyhexamethyleneguanidine phosphate, or polyhexamethyleneguanidine gluconate, or polyhexamethylenebiguanide, or polyhexamethyleneguanidine was used as the second active reagent. The concentration of polyhexamethylenebiguanide or polyhexamethyleneguanidine, or at least, polyhexamethylenebiguanide or polyhexamethyleneguanidine salt ranged from 0.00001 to 1 wt%, the concentration of silver nanoparticles ranged from 0.00001 to 1 wt%, in some examples the silver salt was introduced additionally into a solution, silver nitrate, or acetate, or citrate, or chloride, or bromide, or iodide or sulphate was used as a silver salt, the concentration of silver salt ranged from 0.00001 to 1 wt%, seeds or vegetative plants was treated with preparation. The low-solubility silver salts, for example silver chloride, bromide, iodide or sulphate was added into solution in the form of powder or powder dispersion in water to form, ultimately, the corresponding colloid solution.

Assessment of the effectiveness of the plant growth and development stimulation was conducted in accordance with the National State Standard 13056.6-97 "Seeds of trees and shrubs. Method for determination of the germination ability". The standard applies to the seeds of trees and shrubs, intended for planting, and specifies a method for determining its germination ability. The germination ability is determined by accounting normally developed seedlings at a certain time, including by preliminary count quickly and amicably sprouted seeds (germinating power), and by accounting the other seeds categories. Assessment of the effectiveness of the plant growth and development stimulation was carried out analogously in respect to trees and shrubs cultures, including Norway maple, weeping birch, petiolate oak, Scotch pine, horticultural and small-fruit crops, including apple, pear, cherry, plum trees, buckthorn, currant, gooseberry, raspberry. In all cases technical result consists in statistically significant plant growth and development stimulation was achieved.

### Group of examples 3

In the group of examples 3 the plant growth and development stimulator was prepared, similarly example 1, though the silver nanoparticles was used as the first active reagent, polyhexamethylenebiguanide hydrochloride or polyhexamethylenebiguanide phosphate, or polyhexamethylenebiguanide gluconate, or polyhexamethyleneguanidine hydrochloride, or polyhexamethyleneguanidine phosphate, or polyhexamethyleneguanidine gluconate, or polyhexamethylenebiguanide, or polyhexamethyleneguanidine was used as the second active reagent. The concentration of polyhexamethylenebiguanide or polyhexamethyleneguanidine, or at least, polyhexamethylenebiguanide or polyhexamethyleneguanidine salt ranged from 0.00001 to 1 wt%, the concentration of silver nanoparticles ranged from 0.00001 to 1 wt%, in some examples the silver salt was introduced additionally into a solution, silver nitrate, or acetate, or citrate, or chloride, or bromide, or iodide or sulphate was used as a silver salt, the concentration of silver salt ranged from 0.00001 to 1 wt%, seeds or vegetative plants was treated with preparation. The low-solubility silver salts, for example silver chloride, bromide, iodide or sulphate was added into solution in the form of powder or powder dispersion in water to form, ultimately, the corresponding colloid solution.

Assessment of the effectiveness of the plant growth and development stimulation was conducted in accordance with the National State Standard 13056.6-97 "Seeds of floricultural crop. Method for determination of the germination ability and power". The standard applies to the seeds of floricultural crop, intended for planting, and specifies a method for determining its germination ability and power. Assessment of the effectiveness of the plant growth and development stimulation was carried out in respect to horticultural and decorative crops, including aster, mallow and dahila. In all cases technical result consists in statistically significant plant growth and development stimulation was achieved.

### Group of examples 4

In the group of examples 4 the plant growth and development stimulator was prepared, similarly example 1, though the silver nanoparticles was used as the first active reagent, polyhexamethylenebiguanide hydrochloride or polyhexamethylenebiguanide phosphate, or polyhexamethylenebiguanide gluconate, or polyhexamethyleneguanidine hydrochloride, or polyhexamethyleneguanidine phosphate, or polyhexamethyleneguanidine gluconate, or polyhexamethylenebiguanide, or polyhexamethyleneguanidine was used as the second active reagent. The concentration of polyhexamethylenebiguanide or polyhexamethyleneguanidine, or at least, polyhexamethylenebiguanide or polyhexamethyleneguanidine salt ranged from 0.00001 to 1 wt%, the concentration of silver nanoparticles ranged from 0.00001 to 1 wt%, in some examples the silver salt was introduced additionally into a solution, silver nitrate, or acetate, or citrate, or chloride, or bromide, or iodide or sulphate was used as a silver salt, the concentration of silver salt ranged from 0.00001 to 1 wt%, seeds or vegetative plants was treated with preparation. The low-solubility silver salts, for example silver chloride, bromide, iodide or sulphate was added into solution in the form of powder or powder dispersion in water to form, ultimately, the corresponding colloid solution.

Assessment of the effectiveness of the plant growth and development stimulation was conducted in accordance with the National State Standard 30556-98 "Seeds of essential-oil culture. Method for determination of the germination ability". The standard applies to the seeds of essential-oil culture, intended for planting, and specifies a method for determining its germination ability and power. Assessment of the effectiveness of the plant growth and development stimulation was carried out in respect to technical and essential-oil crops, including anise, coriander, cumin, cotton plant, sunflower. In all cases technical result consists in statistically significant plant growth and development stimulation was achieved. Thus, it was found, that the use of preparation, containing of 0.001 wt% polyhexamethylenebiguanide hydrochloride and 0.01 wt% silver nanoparticles, statistically significant increases the sunflower seeds germination ability by 3.1%, compared with the control experiments in which, distilled water was used instead the plant growth and development stimulator.

Thus, technical result consists in statistically significant plant growth and development stimulation is achieved when using preparation, containing the silver nanoparticles and the polyhexamethylenebiguanide or polyhexamethyleneguanidine or, at least, one polyhexamethylenebiguanide or polyhexamethyleneguanidine salt as a plant growth and development stimulator.

## Claims

1. The plant growth and development stimulator containing the silver nanoparticles and the polyhexamethylenebiguanide or polyhexamethyleneguanidine or, at least, one polyhexamethylenebiguanide or polyhexamethyleneguanidine salt.

2. The plant growth and development stimulator according to claim 1 wherein the concentration of the polyhexamethylenebiguanide or polyhexamethyleneguanidine or, at least, one polyhexamethylenebiguanide or polyhexamethyleneguanidine salt in the plant growth and development stimulator ranges from 0.00001 to 1 wt%.

3. The plant growth and development stimulator according to claim 1 wherein the concentration of the silver nanoparticles in the plant growth and development stimulator ranges from 0.00001 to 1 wt%.

4. The plant growth and development stimulator according to claim 1 wherein the plant growth and development stimulator includes, at least, one silver salt.

5. The plant growth and development stimulator according to claim 4 wherein the silver salt is selected from a group, including silver nitrate, acetate, citrate, chloride, bromide, iodide and sulphate.

6. The plant growth and development stimulator according to claim 4 wherein at least the one silver salt concentration in the plant growth and development stimulator varies from 0.00001 to 1 wt%.

7. The plant growth and development stimulator according to claim 1 wherein the plants are selected from a group, including vine, forage and tilled, trees and shrubs, fruit, berry, garden, decorative, technical and essential-oil crops.

8. The plant growth and development stimulator according to claim 1 wherein the plants are selected from a group, including baga, rape, watermelon, melon, gourd, Norway maple, weeping birch, petiolate oak, Scotch pine, apple, pear, cherry, plum trees, buckthorn, currant, gooseberry, raspberry, aster, mallow, dahlia, anise, coriander, cumin, cotton plant, sunflower.

9. The plant growth and development stimulator according to claim 1 wherein at least the one polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate.

10. The method of the plant growth and development stimulation, in which the seeds or vegetative plants are treated with the solution, containing of the silver nanoparticles and polyhexamethylenebiguanide or polyhexamethyleneguanidine or, at least, the one polyhexamethylenebiguanide or polyhexamethyleneguanidine salt, or the method of the plant growth and development stimulation, wherein the plant seeds or vegetative plants are treated with a solution, comprising the silver nanoparticles and treated with a solution, comprising polyhexamethylenebiguanide or polyhexamethyleneguanidine or, at least, one polyhexamethylenebiguanide or polyhexamethyleneguanidine salt.

11. The method of the plant growth and development stimulation according to claim 10 wherein the polyhexamethylenebiguanide or polyhexamethyleneguanidine or, at least, one polyhexamethylenebiguanide or polyhexamethyleneguanidine salt concentration in solution varies from 0.00001 to 1 wt%.

12. The method of the plant growth and development stimulation according to claim 10 wherein the silver nanoparticles concentration in the plant growth and development stimulator varies from 0.00001 to 1 wt%.

13. The method of the plant growth and development stimulation according to claim 10 wherein the solution, containing silver nanoparticles, additionally includes, at least, one silver salt.

14. The method of the plant growth and development stimulation according to claim 13 wherein the silver salt is selected from a group, including silver nitrate, acetate, citrate, chloride, bromide, iodide and sulphate.

15. The method of the plant growth and development stimulation according to claim 13 wherein the at least the one silver salt concentration varies from 0.00001 to 1 wt%.

16. The method of the plant growth and development stimulation according to claim 10 wherein the plants are selected from a group, including vine, forage and tilled, trees and shrubs, fruit, berry, garden, decorative, technical and essential-oil crops.

17. The method of the plant growth and development stimulation according to claim 10 wherein the plants are selected from a group, including baga, rape, watermelon, melon, gourd, Norway maple, weeping birch, petiolate oak, Scotch pine, apple, pear, cherry, plum trees, buckthorn, currant, gooseberry, raspberry, aster, mallow, dahlia, anise, coriander, cumin, cotton plant, sunflower.

18. The method of the plant growth and development stimulation according to claim 10 wherein at least the one polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate.

19. The plant growth and development stimulator of a spring and winter corn, grain legumes, containing the silver nanoparticles and the polyhexamethylenebiguanide or polyhexamethyleneguanidine or, at least, one polyhexamethylenebiguanide or polyhexamethyleneguanidine salt.

20. The plant growth and development stimulator of a spring and winter corn, grain legumes according to claim 19 wherein the concentration of the polyhexamethylenebiguanide or polyhexamethyleneguanidine or, at least, one polyhexamethylenebiguanide or polyhexamethyleneguanidine salt in the plant growth and development stimulator ranges from 0.00001 to 1 wt%.

21. The plant growth and development stimulator of a spring and winter corn, grain legumes according to claim 19 wherein the concentration of the silver nanoparticles in the spring and winter corn, grain legumes growth and development stimulator ranges from 0.00001 to 1 wt%.

22. The plant growth and development stimulator of a spring and winter corn, grain legumes according to claim 19 wherein the spring and winter corn, grain legumes growth and development stimulator includes, at least, one silver salt.

23. The plant growth and development stimulator of a spring and winter corn, grain legumes according to claim 22 wherein the silver salt is selected from a group, including silver nitrate, acetate, citrate, chloride, bromide, iodide and sulphate.

24. The plant growth and development stimulator of a spring and winter corn, grain legumes according to claim 22 wherein at least the one silver salt concentration in the plant growth and development stimulator varies from 0.00001 to 1 wt%.

25. The plant growth and development stimulator of a spring and winter corn, grain legumes according to claim 22 wherein the a spring and winter corn, grain legumes are selected from a group, including a pea, corn, oat, panic, wheat, buckwheat, rice, rye, soybean, bean, barley.

26. The plant growth and development stimulator of a spring and winter corn, grain legumes according to claim 19 wherein at least the one polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate.

27. The method of the plant growth and development stimulation of a spring and winter corn, grain legumes, in which the spring and winter corn, grain legumes seeds or vegetative plants are treated with the solution, containing of the silver nanoparticles and polyhexamethylenebiguanide or polyhexamethyleneguanidine or, at least, the one polyhexamethylenebiguanide or polyhexamethyleneguanidine salt, or the method of the plant growth and development stimulation of a spring and winter corn, grain legumes, wherein the spring and winter corn, grain legumes seeds or vegetative plants are treated with a solution, comprising the silver nanoparticles and treated with a solution, comprising polyhexamethylenebiguanide or polyhexamethyleneguanidine or, at least, one polyhexamethylenebiguanide or polyhexamethyleneguanidine salt.

28. The method of a spring and winter corn, grain legumes growth and development stimulation according to claim 27 wherein the polyhexamethylenebiguanide or polyhexamethyleneguanidine or, at least, one polyhexamethylenebiguanide or polyhexamethyleneguanidine salt concentration in solution varies from 0.00001 to 1 wt%.

29. The method of a spring and winter corn, grain legumes growth and development stimulation according to claim 27 wherein the silver nanoparticles concentration in the plant growth and development stimulator varies from 0.00001 to 1 wt%.

30. The method of a spring and winter corn, grain legumes growth and development stimulation according to claim 27 wherein the solution, containing silver nanoparticles, additionally includes, at least, one silver salt.

31. The method of a spring and winter corn, grain legumes growth and development stimulation according to claim 27 wherein the silver salt is selected from a group, including silver nitrate, acetate, citrate, chloride, bromide, iodide and sulphate.

32. The method of a spring and winter corn, grain legumes growth and development stimulation according to claim 27 wherein the at least the one silver salt concentration varies from 0.00001 to 1 wt%.

33. The method of a spring and winter corn, grain legumes growth and development stimulation according to claim 27 wherein the spring and winter corn, grain legumes are selected from a group, including a pea, corn, oat, panic, wheat, buckwheat, rice, rye, soybean, bean, barley.

34. The method of a spring and winter corn, grain legumes growth and development stimulation according to claim 27 wherein at least the one polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate.

35. The open-ground and indoor vegetable crops growth and development stimulator, containing the silver nanoparticles and the polyhexamethylenebiguanide or polyhexamethyleneguanidine or, at least, one polyhexamethylenebiguanide or polyhexamethyleneguanidine salt.

36. The open-ground and indoor vegetable crops growth and development stimulator according to claim 35 wherein the concentration of the polyhexamethylenebiguanide or polyhexamethyleneguanidine or, at least, one polyhexamethylenebiguanide or polyhexamethyleneguanidine salt in the open-ground and indoor vegetable crops growth and development stimulator ranges from 0.00001 to 1 wt%.

37. The open-ground and indoor vegetable crops growth and development stimulator according to claim 35 wherein the concentration of the silver nanoparticles in the open-ground and indoor vegetable crops growth and development stimulator ranges from 0.00001 to 1 wt%.

38. The open-ground and indoor vegetable crops growth and development stimulator according to claim 35 wherein the open-ground and indoor vegetable crops growth and development stimulator includes, at least, one silver salt.

39. The open-ground and indoor vegetable crops growth and development stimulator according to claim 35 wherein the silver salt is selected from a group, including silver nitrate, acetate, citrate, chloride, bromide, iodide and sulphate.

40. The open-ground and indoor vegetable crops growth and development stimulator according to claim 35 wherein at least the one silver salt concentration in the plant growth and development stimulator varies from 0.00001 to 1 wt%.

41. The open-ground and indoor vegetable crops growth and development stimulator according to claim 35 wherein the open-ground and indoor vegetable crops are selected from a group, including an onion, carrot, tomato, cuke, beet.

42. The open-ground and indoor vegetable crops growth and development stimulator according to claim 35 wherein at least the one polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate.

43. The method of the open-ground and indoor vegetable crops growth and development stimulation, in which the open-ground and indoor vegetable crops seeds or vegetative plants are treated with the solution, containing of the silver nanoparticles and polyhexamethylenebiguanide or polyhexamethyleneguanidine or, at least, the one polyhexamethylenebiguanide or polyhexamethyleneguanidine salt, or the method of the open-ground and indoor vegetable crops growth and development stimulation wherein the open-ground and indoor vegetable crops seeds or vegetative plants are treated with a solution, comprising the silver nanoparticles and treated with a solution, comprising polyhexamethylenebiguanide or polyhexamethyleneguanidine or, at least, one polyhexamethylenebiguanide or polyhexamethyleneguanidine salt.

44. The method of the open-ground and indoor vegetable crops growth and development stimulation according to claim 43 wherein the polyhexamethylenebiguanide or polyhexamethyleneguanidine or, at least, one polyhexamethylenebiguanide or polyhexamethyleneguanidine salt concentration in solution varies from 0.00001 to 1 wt%.

45. The method of the open-ground and indoor vegetable crops growth and development stimulation according to claim 43 wherein the silver nanoparticles concentration in the plant growth and development stimulator varies from 0.00001 to 1 wt%.

46. The method of the open-ground and indoor vegetable crops growth and development stimulation according to claim 43 wherein the solution, containing silver nanoparticles, additionally includes, at least, one silver salt.

47. The method of the open-ground and indoor vegetable crops growth and development stimulation according to claim 46 wherein the silver salt is selected from a group, including silver nitrate, acetate, citrate, chloride, bromide, iodide and sulphate.

48. The method of the open-ground and indoor vegetable crops growth and development stimulation according to claim 46 wherein the at least the one silver salt concentration varies from 0.00001 to 1 wt%.

49. The method of the open-ground and indoor vegetable crops growth and development stimulation according to claim 43 wherein the open-ground and indoor vegetable crops are selected from a group, including an onion, carrot, tomato, cuke, beet.

50. The method of the open-ground and indoor vegetable crops growth and development stimulation according to claim 43 wherein at least the one polyhexamethylenebiguanide or polyhexamethyleneguanidine salt is selected from a group, including polyhexamethylenebiguanide hydrochloride, polyhexamethylenebiguanide phosphate, polyhexamethylenebiguanide gluconate, polyhexamethyleneguanidine hydrochloride, polyhexamethyleneguanidine phosphate, polyhexamethyleneguanidine gluconate.
